# EUROPÄISCHE PATENTSCHRIFT

(11) **EP 2 623 813 B1**
(45) Veröffentlichungstag und Bekanntmachung des Hinweises auf die Patenterteilung: **09.04.2014**
(21) Anmeldenummer: 12007229.3
(22) Anmeldetag: 13.06.2008
(51) Int. Cl.: F16D 3/64, F16F 15/124

(54) **Elastische Wellenkupplung mit adaptiver Charakteristik**
ELASTIC SHAFT COUPLING WITH ADAPTIVE CHARACTERISTICS
ACCOUPLEMENT D'ARBRE ELASTIQUE À CARACTÉRISTIQUE ADAPTIVE

(43) Veröffentlichungstag der Anmeldung: 07.08.2013
(62) Teilanmeldung aus: 08758180.7
(73) Patentinhaber: Centa-Antriebe Kirschey GmbH, 42781 Haan (DE)
(72) Erfinder: Exner, Jochen, 53773 Hennef (DE)
(74) Vertreter: Roche, von Westernhagen & Ehresmann

(56) Entgegenhaltungen:
- EP-A1- 0 784 163
- EP-A1- 1 788 269
- DE-A1- 3 543 915
- DE-A1- 10 236 752
- DE-A1-102006 053 282

## Beschreibung

Die Erfindung betrifft eine elastische Wellenkupplung mit einem rückstellelastischen Kupplungskörper und einer antriebsseitigen Befestigungseinrichtung, wie Befestigungsflansch zur Anordnung der Kupplung an einem Motorschwungrad, und einer abtriebsseitigen Befestigungseinrichtung, wie Befestigungsflansch zur Anordnung der Kupplung an einer Wellennabe.

Elastische Wellenkupplungen dieser Art sind in zahlreichen unterschiedlichen Ausführungsformen mit axialem Kraftfluss oder radialem Kraftfluss, mit einem oder mehreren rückstellelastischen Kupplungskörpern, die seriell oder parallel geschaltet sind, bekannt. Als Beispiel seien die druckschriftlich belegbaren Wellenkupplungen der DE 100 13 412 A1 oder der gattungsgemäße DE 10 2005 055 605 A1 genannt.

Neben dem Ausgleich von radialem und/oder axialem Versatz von Antriebs- und Abtriebsaggregat dienen diese elastischen Wellenkupplungen insbesondere dazu, Drehschwingungen und Drehmomentspitzen zwischen an- und abgetriebenen Aggregaten aufzunehmen, wie sie beispielsweise durch den unrunden Lauf von Dieselmotoren entstehen.

Jede Kupplung ist auf einen bestimmten Betriebsbereich ausgelegt, in welchem sie die Drehschwingungen des Gesamtsystems besonders gut reduzieren kann. Bei bestimmten Anwendungen sind mehrere Kupplungen der eingangs genannten Art zusammengeschaltet, um beispielsweise über einen weiten Drehzahlbereich des Antriebs eine optimale Schwingungsdämpfung zu erreichen. Hier nimmt eine erste Kupplung die Drehschwingungen bei niedrigen Drehzahlen, eine zweite Kupplung die Drehschwingungen bei hohen Drehzahlen auf. Als Beispiel für eine solche Kupplungsanordnung sei EP 0 626 523 B1 genannt, bei welcher eine Kupplungsstufe mit linearer Kennlinie und eine Kupplungsstufe mit progressiver Kennlinie zu einer zweistufigen Kupplungsanordnung zusammengeschaltet sind. So lässt sich eine Kupplung schaffen, die Drehschwingungen über einen weiten Betriebsbereich des Antriebs ausgleichen kann.

Zweistufige Kupplungen, die sich die Wirkung unterschiedlicher Kennlinien der Kupplungskörper zur Drehschwingungskompensation zunutze zu machen, erfüllen ihre Aufgabe im wesentlichen sehr zuverlässig, weisen jedoch das Problem auf, dass einerseits auch hier der Betriebsbereich des Gesamtsystems immer noch beschränkt ist durch die Summe der Betriebsbereiche des jeweiligen Kupplungskörpers und andererseits die Drehschwingungskompensation im Übergangsbereich von einer zur anderen Kupplungsstufe noch verbesserungswürdig ist.

Aufgabe der Erfindung ist es deshalb, eine Kupplung zu schaffen, welche Drehschwingungen in einem weiten Frequenzbereich wirksam reduzieren kann.

Diese Aufgabe löst eine elastische Wellenkupplung mit den Merkmalen des Anspruches 1. Weitere Merkmale der Erfindung sind dem Merkmalen der Unteransprüche zu entnehmen.

Erfindungsgemäß ist der rückstellelastische Kupplungskörper über ein Verbindungselement mit einer die Drehschwingung tilgenden Masse gekoppelt.

Dabei ist insbesondere vorgesehen, dass das Verbindungselement ein zweiter rückstellelastischer Kupplungskörper ist, der in seiner Steifigkeit mittels Stellelementen beeinflussbar ist, insbesondere wenn die Stellelemente Piezoelemente sind. Auch der Einsatz eines magnetorheologischen Elastomers ist denkbar.

Hierbei ist es möglich, auf das Einbetten von Stellelementen in den rückstellelastischen Kupplungskörper zu verzichten und stattdessen die Steifigkeit und somit die Wirkung der Tilgermasse durch entsprechende Beeinflussung des Verbindungselementes zu steuern. Die Drehschwingungskompensation erfolgt hier allein durch die Tilgermasse. Selbstverständlich kann das Verbindungselement, welches auch als zweiter rückstellelastischer Kupplungskörper bezeichnet wird, als magnetorheologischer Elastomer ausgebildet sein oder eingebettete Piezoelemente aufweisen.

Ganz allgemein ist eine Ausführungsform bevorzugt, bei welcher der Kupplungskörper als Elastomer ausgebildet ist.

Weitere Vorteile der Erfindung ergeben sich aus der nachfolgenden Beschreibung verschiedener Ausführungsbeispiele. Es zeigen:
- Fig. 1: schematische Teildarstellung eines bekannten Kupplungselementes,
- Fig. 2: grafische Darstellung der Resonanzlage des Kupplungselementes in Fig. 1 in Abhängigkeit von der Frequenz,
- Fig. 3: schematische Teildarstellung eines erfindungsgemäßen Kupplungselements,
- Fig. 4: die grafische Darstellung der Wirkung der erfindungsgemäßen Stellelemente auf die Resonanzlage des Kupplungselementes gemäß Fig. 3 in Abhängigkeit der Frequenz
- Fig. 5: schematische Darstellung der Anordnung von Stellelementen innerhalb des Kupplungskörpers,
- Fig. 6: schematische Darstellung der Beeinflussung der Drehschwingung durch eine in ihrer Wirkung regelbare Tilgermasse.

In den Figuren ist ein Kupplungskörper einer elastischen Wellenkupplung insgesamt mit der Bezugsziffer 10 versehen.

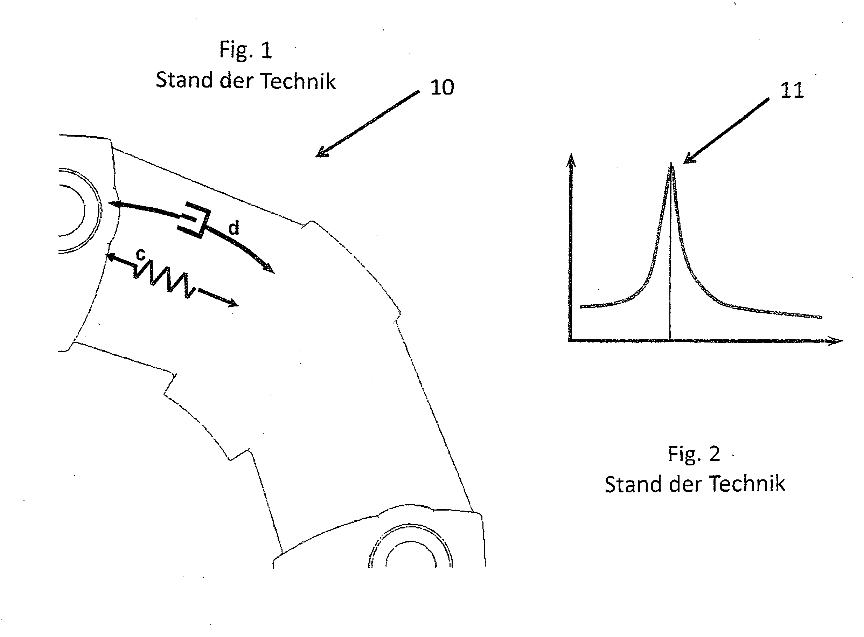

Der Kupplungskörper 10 des Standes der Technik, welcher in Fig. 1 dargestellt ist, besteht aus einem rückstellelastischen Material, vorzugsweise aus einem Elastomer. Dieser Elastomer weist in Abhängigkeit von seiner Zusammensetzung eine feste Elastizität c und eine feste Dämpfung d auf.

Das Frequenzdiagramm der Fig.2 zeigt einen möglichen Drehschwingungsverlauf des Kupplungskörpers in Fig. 1 in Abhängigkeit der Frequenz. Auf der X-Achse lässt sich die Frequenz bzw. die Drehzahl anordnen, auf der Y-Achse die Vergrößerungsfunktion, das heißt, allgemein Drehmoment, Kraft oder Weg. Bei 11 existiert eine maximale Überhöhung der Schwingungsamplitude, die in einer realen Anlage zu vermeiden ist. Man wählt in der Regel eine über- oder unterkritische Lage der Betriebsbereiche zu dieser Resonanz. Die Frequenzlage ist für eine Kupplung nach Fig. 1 fest.

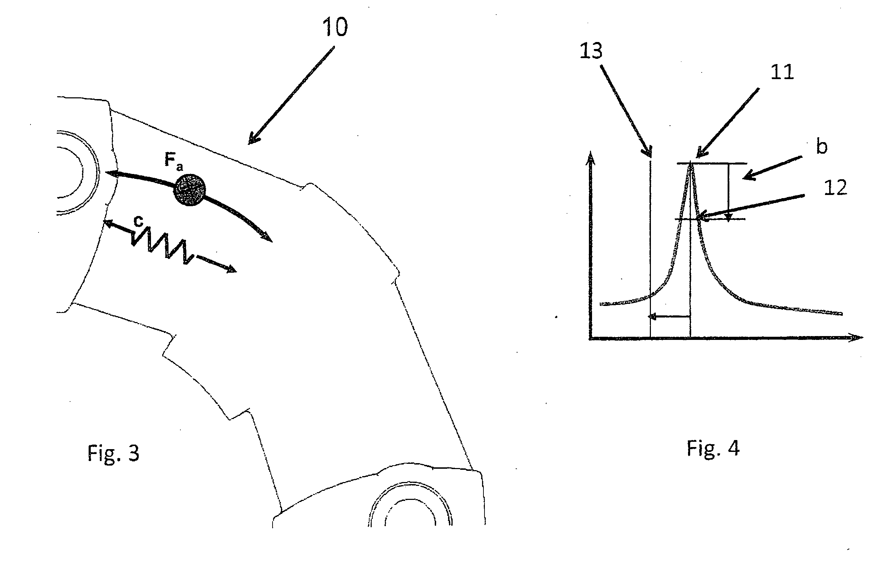

In den Kupplungskörper der Fig. 3 ist ein Stellglied Fₐ eingebettet. Dieses Stellglied lässt sich aktivieren und steuern. Durch die gesteuerte Aktivierung des Stellgliedes Fₐ kann die Resonanzlage beeinflusst werden. Dieses führt gemäß Fig. 4 zu einer Beeinflussung der Elastizität und/oder der Dämpfung d. Die Resonanzlage kann dadurch variabel in Abhängigkeit von augenblicklichen Betriebsbereichen verschoben werden. Falls eine Resonanzlage nicht zu vermeiden ist, kann die Amplitudenüberhöhung durch Anpassen der Dämpfung gemindert werden.

In Fig. 4 ist dargestellt, dass das die Überhöhung im Resonanzfalt 11 um den Betrag b auf die reduzierte Überhöhung 12 durch Aktivieren des Stellgliedes Fₐ abgesenkt wird. Dies bedeutet, dass das Stellglied Fₐ durch Aktivierung die Dämpfung d des Kupplungskörpers 10 erhöht. Weiterhin ist in Fig. 4 dargestellt, dass anstelle einer Erhöhung der Dämpfung die Elastizität veränderbar ist. Hier bewirkt das Stellglied Fₐ eine Verlagerung der Frequenzlage der Resonanz 11 entlang der X-Achse zur neuen Lage 13. Bezüglich Fig. 4 ist zu beachten, dass es sich hier um eine statische Darstellung handelt und in einem dynamischen Antriebssystem mit elastischer Wellenkupplung in der Regel Mischzustände im Frequenzspektrum auftreten. Je nach Situation kann der Einfluss auf die Elastizität und/oder Dämpfung an den Anwendungsfall angepasst werden.

Um mittels eines Stellgliedes die Dämpfung bzw. die Elastizität des Kupplungskörpers 10 verändern zu können, wird der Kupplungskörper 10 erfindungsgemäß wie folgt weiter gebildet:

Bei einem ersten Beispiel werden in das Elastomermaterial, insbesondere ist hier Gummi vorgesehen, magnetische Partikel eingelagert. Während der Vulkanisation des Kupplungskörpers wird ein magnetisches Feld angelegt, so dass die Partikel gleichgerichtet werden und so die Elastizität durch einen Basiswert 1 wenigstens in eine Richtung vorgegeben ist. Nach Abschluss der Vulkanisation wird das Magnetfeld aufgehoben. Damit wird die Gleichrichtung der Partikel aufgehoben und die Elastizität durch Behinderung der Gleitebenen auf einen erhöhten Wert 2 verändert.. Man erhält einen magnetorheologischen Elastomer, der sich durch erneutes Anlegen eines magnetischen Feldes bezüglich seiner Steifigkeit proportional und reversibel verändern lässt.

Im Betrieb einer elastischen Wellenkupplung wirken sich die in den Elastomer eingebetteten Stellglieder zunächst nicht weiter aus. Um die Elastizität und/oder die Dämpfung des Kupplungskörpers 10 gezielt zu beeinflussen, ist dessen Integration in einen Regelkreis notwendig. Vorgesehen ist ein Sensor, der die Drehschwingung des Systems erfasst, ein Wirkelement, insbesondere ein regelbarer Elektromagnet, der die magnetischen Partikel aktiviert und eine zentrale Steuereinheit, die den Istwert mit einem vorgegebenen Sollwert vergleicht und mittels des Elektromagneten die Stärke des Magnetfeldes und so die Stärke der Anregung bzw. Ausrichtung der magnetischen Partikel bestimmt.

Durch Integration magnetischer Partikel in den Kupplungskörper und somit durch Bildung eines magnetorheologischen Elastomers und dessen Einbindung in einen entsprechenden Regelkreis wird eine adaptive Kupplung geschaffen, die durch Beeinflussung der Elastizität und der Dämpfung des Elastomers Drehschwingungen in einem gegenüber dem Stand der Technik erweiterten Betriebsbereich wirksam tilgen kann.

Bei einem anderen Beispiel ist vorgesehen, Stellglieder in Form von Piezoelementen in den aus einem Elastomer gebildeten Kupplungskörper 10 einzubetten. Solche Piezoelemente verformen sich bei Anlegen einer elektrischen Spannung bzw. erzeugen eine elektrische Spannung bei Verformung. Bekannt sind verschiedene Kristalle, Quarze oder industriell herstellbare Sinterkeramiken, die Piezoeigenschaften aufweisen.

Idealerweise sind mehrere Piezoelemente aufeinandergeschichtet und zu einem Stapel bzw. Stack zusammengesetzt. Solche Stapel erlauben große Stellwege und außerordentlich große Stellkräfte. Die bei dieser Ausführungsform als Stellglieder genutzten Piezoelemente sind hinsichtlich ihrer Wirkrichtung innerhalb des Elastomers auszurichten. Denkbar ist es, eine solche Baueinheit, im Zug- oder Druckmodus, bezogen auf die Verformung des Kupplungskörpers 10, zu betreiben. Ebenso wäre ein Schubmodus denkbar. Ziel ist es, die Piezoelemente so innerhalb des Elastomers auszurichten, dass diese den dynamischen Betriebskräften direkt oder indirekt entgegen wirken können.

Auch eine elastische Wellenkupplung mit in den Kupplungskörper 10 eingebetteten Piezoelementen ist Teil eines Regelkreises. Wie schon vorbeschrieben werden die Drehschwingungen von einem geeigneten Sensor erfasst, eine zentrale Steuerung vergleicht diesen Wert mit einem Sollwert und aktiviert die Piezoelemente durch Anlegen einer Spannung in einem die Drehschwingung im optimalen Falle vollständig austilgendem Maße. Bei dieser Ausführungsform können einige der gegebenenfalls in einem Stack zusammengefassten Piezoelemente als Sensor dienen. Diese werden durch Drehschwingungsimpulse verformt, wobei die erzeugte Spannung ein Maß für die Stärke des Schwingungsimpulses ist. Über den Regelkreis lassen sich die als Aktor dienenden Piezoelemente zur Schwingungstilgung ansteuern.

Eine Ausführungsform der Erfindung bedient sich einer aktiv steuerbaren Tilgermasse, um Drehschwingungen im Antriebsstrang zu vermeiden.

Grundsätzlich ist es bei rotierenden Systemen bekannt, einen rotierenden Körper mit einer Tilgermasse, auch Gegenschwingmasse genannt, zu versehen, die in einem bestimmten Betriebszustand bzw. über einen bestimmten Betriebsbereich hinweg aufgrund ihrer Eigenschwingung die Drehschwingung des Rotationskörpers in gewissem Maße auslöscht. Solche starr mit dem rotierenden Körper verbundene Tilgermassen finden sich beispielsweise an Schwungrädern von Motoren.

Bei dieser Ausführungsform der Erfindung wird ein Kupplungskörper 10 aus dem Stand der Technik über ein Verbindungselement um eine solche Tilgermasse ergänzt. Das Verbindungselement ist nunmehr als rückstellelastischer Kupplungskörper im Sinne seiner kuppelnden Eigenschaften von elastischer Wellenkupplung und Tilgermasse anzusehen. Dieses Verbindungselement kann entweder als magnetorheologischer Elastomer ausgestaltet sein und somit - wie vorbeschrieben - Stellglieder in Form von magnetischen Partikeln aufweisen oder weist Stellglieder in Form von Piezoelementen auf. In beiden Fällen lässt sich die Elastizität und/oder Dämpfung des Verbindungselementes beeinflussen, so dass in Abhängigkeit von der Drehschwingung im Antriebsstrang die zur Tilgung notwendige Gegenschwingung der Tilgermasse regelbar ist.

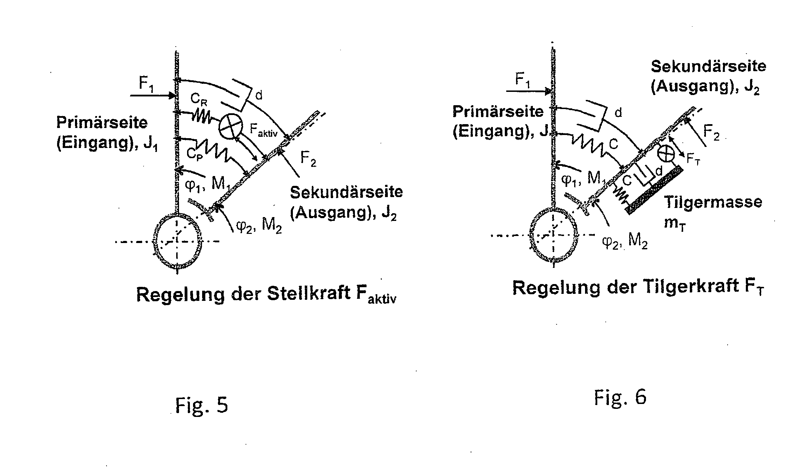

Die Fig. 5 und 6 zeigen schematisch die mögliche Anordnung von Stellgliedern Fₐ in Bezug zur Grundelastizität c und zur Grunddämpfung d. In Fig. 5 sind Beispiele schematisch dargestellt, bei welchen die Stellglieder in den den Kupplungskörper bildenden Elastomer eingebettet sind. Hierbei kann es sich, wie oben bereits beschrieben, um Piezoelemente oder magnetische Partikel handeln.

Fₐ kann zur Elastizität c in Reihe angeordnet sein, was in Fig. 5 durch die Elastizität Cᵣ und das nachgeschaltete Stellglied Fₐ symbolisiert ist. Genau so gut ist es jedoch möglich, dass auf Cᵣ verzichtet wird und das Stellglied Fa parallel zur Elastizität Cp wirkt. Auch die Kombination ist möglich.

In Fig. 6 ist schematisch die Ausführungsform der Erfindung dargestellt, bei welcher eine Tilgermasse m_{T} mit dem Kupplungskörper 10 über ein Verbindungselement gekoppelt ist. Dieses Verbindungselement ist wiederum ein Elastomer, in welchem Stellglieder F_{T} eingebettet sind. Diese beeinflussen die Dämpfung d und/oder die Elastizität c des rückstellelastischen Verbindungselementes um die Schwingungsfrequenz der Tilgermasse derart zu beeinflussen, dass sie die Drehschwingung im Antriebsstrang auslöscht bzw. reduziert.

Zusammenfassend betrifft die Erfindung eine weiter entwickelte elastische Wellenkupplung, welche auf die Tilgung der Drehschwingung in einem bestimmten Betriebszustand des Antriebsstranges ausgelegt ist. Die elastische Wellenkupplung wird durch Hinzufügen von Stellgliedern, zu einer adaptiven Kupplung weiter entwickelt, welche durch Einbindung der Stellglieder in einen Regelkreis Drehschwingungen in verschiedenen Betriebszuständen der Kupplung tilgen kann. Dabei lässt sich durch eine entsprechende Regellogik theoretisch zu jeder Schwingungsfrequenz eine die Schwingung auslöschende Elastizität oder Dämpfung realisieren. Hierdurch können die Vibrationen im Antriebsstrang über einen weiten Drehzahlbereich sicher unterbunden werden, was sich vorteilhaft auf die Lebensdauer von beispielsweise über die elastische Wellenkupplung mit Dieselmotoren verbundene Getriebe auswirkt.

### Bezugszeichen:

- 10: Kupplungskörper
- 11: Drehschwingungsmaximum
- 12: Drehschwingungsmaximum
- 13: Drehschwingungsmaximum
- 20: Metallscheibe
- 21: Metallscheibe

- c: Elastizität
- d: Dämpfung
- Fₐ: Stellglied
- F_{T}: Stellglied
- b: Betrag

## Patentansprüche

1. Elastische Wellenkupplung mit einem rückstellelastischen Kupplungskörper (10), mit einer antriebsseitigen Befestigungseinrichtung, wie Befestigungsflansch (20) zur Anordnung der Kupplung an einem Motorschwungrad, und mit einer abtriebsseitigen Befestigungseinrichtung, wie Befestigungsflansch (21) zur Anordnung der Kupplung an einer Wellennabe,
**dadurch gekennzeichnet, daß**
der Kupplungskörper über ein Verbindungselement mit einer aktiv steuerbaren Tilgermasse gekoppelt ist,
wobei das Verbindungselement Stellglieder aufweist, mittels derer die Fähigkeit zur Drehschwingungskompensation der Wellenkupplung beeinflussbar ist, und mit denen in Abhängigkeit von der Drehschwingung im Antriebsstrang die zur Tilgung notwendige Gegenschwingung der Tilgermasse regelbar ist.

2. Elastische Wellenkupplung nach Anspruch 1, **dadurch gekennzeichnet, dass** die Stellglieder in einen Regelkreis eingebunden sind.

3. Elastische Wellenkupplung nach Anspruch 1 oder 2, **dadurch gekennzeichnet, dass** ein Wirkelement vorgesehen ist, das die Stellglieder beeinflusst.

4. Elastische Wellenkupplung nach Anspruch 3, **dadurch gekennzeichnet, dass** das Wirkelement die Stellelemente kontaktlos beeinflusst.

5. Elastische Wellenkupplung nach einem der vorangegangenen Ansprüche, **dadurch gekennzeichnet, dass** ein Sensorelement zur aktiven Regelung der elastischen Wellenkupplung vorgesehen ist.

6. Elastische Wellenkupplung nach Anspruch 5, **dadurch gekennzeichnet, dass** das Sensorelement den Betriebszustand der Kupplung, insbesondere die Drehschwingung, erfasst.

7. Elastische Wellenkupplung nach Anspruch 3 und nach Anspruch 5 oder 6, **dadurch gekennzeichnet, dass** das Wirkelement, der Sensor und die Stellelemente Teile eines Regelkreises sind, der die Elastizität des rückstellelastischen Körpers mittels eines Vergleiches eines Sollwertes und eines Istwertes der Drehschwingung der Wellenkupplung beeinflusst.

## Claims

1. Flexible shaft coupling having a resilient coupling body (10), having a driving-side fastening device, such as a fastening flange (20) for arranging the coupling on an engine flywheel, and having a driven-side fastening device, such as a fastening flange (21) for arranging the coupling on a shaft hub,
**characterised in that**
the coupling body is coupled to an actively controllable damping mass via a connecting element,
the connecting element having adjusting elements, by means of which the capability of the shaft coupling to compensate for torsional vibrations is influenceable, and with which the counter-vibration of the damping mass necessary for damping is controllable depending on the torsional vibration in the drive train.

2. Flexible shaft coupling according to Claim 1, **characterised in that** the adjusting elements are integrated in a control circuit.

3. Flexible shaft coupling according to Claim 1 or 2, **characterised in that** an actuator is provided which influences the adjusting elements.

4. Flexible shaft coupling according to Claim 3, **characterised in that** the actuator influences the adjusting elements in a contactless manner.

5. Flexible shaft coupling according to one of the preceding claims, **characterised in that** a sensor element is provided for actively controlling the flexible shaft coupling.

6. Flexible shaft coupling according to Claim 5, **characterised in that** the sensor element detects the operating state of the coupling, in particular the torsional vibration.

7. Flexible shaft coupling according to Claim 3 and according to Claim 5 or 6, **characterised in that** the actuator, the sensor and the adjusting elements are parts of a control circuit which influences the elasticity of the resilient body by comparing a setpoint and an actual value of the torsional vibration of the shaft coupling.

## Revendications

1. Accouplement d'arbre élastique avec un corps d'accouplement (10) à rappel élastique, avec un dispositif de fixation d'entrée, comme une bride de fixation (20) destinée à monter l'accouplement au niveau d'un volant de moteur, et avec un dispositif de fixation de sortie, comme une bride de fixation (21) destinée à monter l'accouplement au niveau d'un moyeu d'arbre, **caractérisé en ce que** le corps d'accouplement est couplé par le biais d'un élément de liaison, à une masse d'amortissement à commande active, l'élément de liaison présentant des organes de réglage, à l'aide desquels la capacité pour compenser la vibration rotationnelle de l'accouplement d'arbre peut être influencée et avec lesquels la vibration opposée, nécessaire à l'amortissement, de la masse d'amortissement peut être réglée en fonction de la vibration rotationnelle dans la chaîne d'entraînement.

2. Accouplement d'arbre élastique selon la revendication 1, **caractérisé en ce que** les organes de réglage sont intégrés dans un circuit de réglage.

3. Accouplement d'arbre élastique selon la revendication 1 ou 2, **caractérisé en ce qu'**il est prévu un élément actif qui influence les organes de réglage.

4. Accouplement d'arbre élastique selon la revendication 3, **caractérisé en ce que** l'élément actif influence sans contact les éléments de réglage.

5. Accouplement d'arbre élastique selon l'une des précédentes revendications, **caractérisé en ce qu'**un élément capteur est prévu pour le réglage actif de l'accouplement d'arbre élastique.

6. Accouplement d'arbre élastique selon la revendication 5, **caractérisé en ce que** l'élément capteur saisit l'état de fonctionnement de l'accouplement, en particulier la vibration rotationnelle.

7. Accouplement d'arbre élastique selon la revendication 3 et la revendication 5 ou 6, **caractérisé en ce que** l'élément actif, le capteur et les éléments de réglage sont des composants d'un circuit de réglage qui influence l'élasticité du corps à rappel élastique à l'aide d'une comparaison d'une valeur de consigne et d'une valeur réelle de la vibration rotationnelle de l'accouplement d'arbre.
